# EUROPEAN PATENT SPECIFICATION

(11) **EP 4 602 423 B1**
(45) Date of publication and mention of the grant of the patent: **12.08.2026**
(21) Application number: 23783461.9
(22) Date of filing: 28.09.2023
(51) Int. Cl.: G02B 27/00, G02B 27/01

(54) **DISPLAY STRUCTURE**
ANZEIGESTRUKTUR
STRUCTURE D'AFFICHAGE

(30) Priority: 13.10.2022 FI 20225929
(43) Date of publication of application: 20.08.2025
(73) Proprietor: Dispelix Oy, 02130 Espoo (FI)
(72) Inventor: HYYTI, Janne, Redmond, Washington 98052 (US); MALKAMÄKI, Aapo, 02130 Espoo (FI); OLKKONEN, Juuso, 02360 Espoo (FI)
(74) Representative: Papula Oy
(86) International application number: PCT/FI2023/050550
(87) International publication number: WO 2024/079384

(56) References cited:
- WO-A1-2020/106824
- WO-A1-2020/257469
- WO-A1-2022/060743
- CN-B- 110 764 261
- US-B1- 10 509 231
- XIONG JIANGHAO ET AL: "Augmented reality and virtual reality displays: emerging technologies and future perspectives", LIGHT: SCIENCE & APPLICATIONS, vol. 10, no. 1, 1 January 2021 (2021-01-01), pages 2047 - 7538, XP093008982, Retrieved from the Internet <URL:https://www.nature.com/articles/s41377-021-00658-8.pdf> DOI: 10.1038/s41377-021-00658-8

## Description

### TECHNICAL FIELD

The present disclosure relates to the field of diffractive optics, and more particularly to a display structure and a display device.

### BACKGROUND

In augmented reality (AR) applications, such as AR glasses, a waveguide with appropriately designed in-coupling and out-coupling structures can be used to create multiple replicas of an exit pupil of a micro-projector in front of a user's eye, forming an eyebox. Image uniformity within the eyebox is one major factor of perceived image quality in such applications.

Publication WO 2022/060743 A1 discloses an eyepiece waveguide for an augmented reality display system. The eyepiece waveguide can include an optically transmissive substrate with an input coupling grating (ICG) region. The ICG region can receive a beam of light and couple the beam into the substrate in a guided propagation mode. The eyepiece waveguide can also include a combined pupil expander-extractor (CPE) grating region that receives the beam of light from the ICG region and alters the propagation direction of the beam with a first interaction and out-couples the beam with a second interaction. The diffractive features of the CPE grating region can be arranged in rows and columns of alternating higher and lower quadrilateral surfaces or the diffractive features can comprise diamond shaped raised ridges. The eyepiece waveguide can also include one or more recycler grating regions.

Publication US 10509231 B1 discloses a waveguide display including a light source assembly, an output waveguide, and a controller. The light source assembly emits an image light that propagates along an input wave vector. The output waveguide includes a waveguide body with two opposite surfaces. The output waveguide includes a first grating receiving an image light propagating along the input wave vector, a second grating, and a third grating positioned opposite to the second grating and outputting an expanded image light with wave vectors matching the input wave vector. The controller controls the illumination of the light source assembly to form a two-dimensional image.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

It is an object to provide a display structure and a display device. The foregoing and other objects are achieved by the features of the independent claims. Further implementation forms are apparent from the dependent claims, the description and the figures.

According to a first aspect, a display structure comprises: a waveguide; an in-coupling structure configured to couple a set of input beams into the waveguide as a set of in-coupled beams; an exit pupil expansion structure located on a first side of the waveguide and configured to receive the set of in-coupled beams and to diffract the set of in-coupled beams in a plurality of directions, producing a diffracted set of beams; and an out-coupling structure located on a second side of the waveguide opposite to the first side and configured to receive, from the exit pupil expansion structure, at least the diffracted set of beams, to out-couple at least the diffracted set of beams from the waveguide as a set of output beams, and to not out-couple the set of in-coupled beams. The display structure can, for example, improve image uniformity of an image represented by the set of output beams. To this end, the out-coupling structure is further configured to diffract the set of in-coupled beams, the in-coupling structure comprises a one-dimensional in-coupling diffractive grating and the out-coupling structure comprises a one-dimensional out-coupling diffractive grating, and light in the set of input beams needs to interact with the in-coupling structure, the exit pupil expansion structure, and the out-coupling structure before the light can be out-coupled from the waveguide.

According to second aspect, a display device comprises a display structure according to the first aspect.

Many of the attendant features will be more readily appreciated as they become better understood by reference to the following detailed description considered in connection with the accompanying drawings.

### DESCRIPTION OF THE DRAWINGS

In the following, example embodiments are described in more detail with reference to the attached figures and drawings, in which:
Fig. 1 illustrates a schematic representation of a display structure according to an embodiment;
Fig. 2 illustrates a cross-sectional representation of a display structure according to an embodiment;
Fig. 3 illustrates a cross-sectional representation of a display structure according to an embodiment;
Fig. 4 illustrates a cross-sectional representation of a display structure according to an embodiment;
Fig. 5 illustrates a k-space representation of beams diffracted by the display structure according to an embodiment;
Fig. 6 illustrates a k-space representation of beams diffracted by the display structure according to an embodiment;
Fig. 7 illustrates a k-space representation of beams diffracted by the display structure according to a comparative example, which does not fall under the scope of the claims;
Fig. 8 illustrates a k-space representation of beams diffracted by the display structure according to a comparative example, which does not fall under the scope of the claims;
Fig. 9 illustrates a k-space representation of beams diffracted by the display structure according to a comparative example, which does not fall under the scope of the claims;
Fig. 10 illustrates a schematic representation of beam paths according to examples; and
Fig. 11 illustrates a schematic representation of correspondence between the set of input beams and the set of output beams;

In the following, identical reference signs refer to similar or at least functionally equivalent features.

### DETAILED DESCRIPTION

In the following description, reference is made to the accompanying drawings, which form part of the disclosure, and in which are shown, by way of illustration, specific aspects in which the present disclosure may be placed. It is understood that other aspects may be utilised, and structural or logical changes may be made without departing from the scope of the present disclosure. The following detailed description, therefore, is not to be taken in a limiting sense, as the scope of the present disclosure is defined be the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. On the other hand, for example, if a specific apparatus is described based on functional units, a corresponding method may include a step performing the described functionality, even if such step is not explicitly described or illustrated in the figures. Further, it is understood that the features of the various example aspects described herein may be combined with each other, unless specifically noted otherwise.

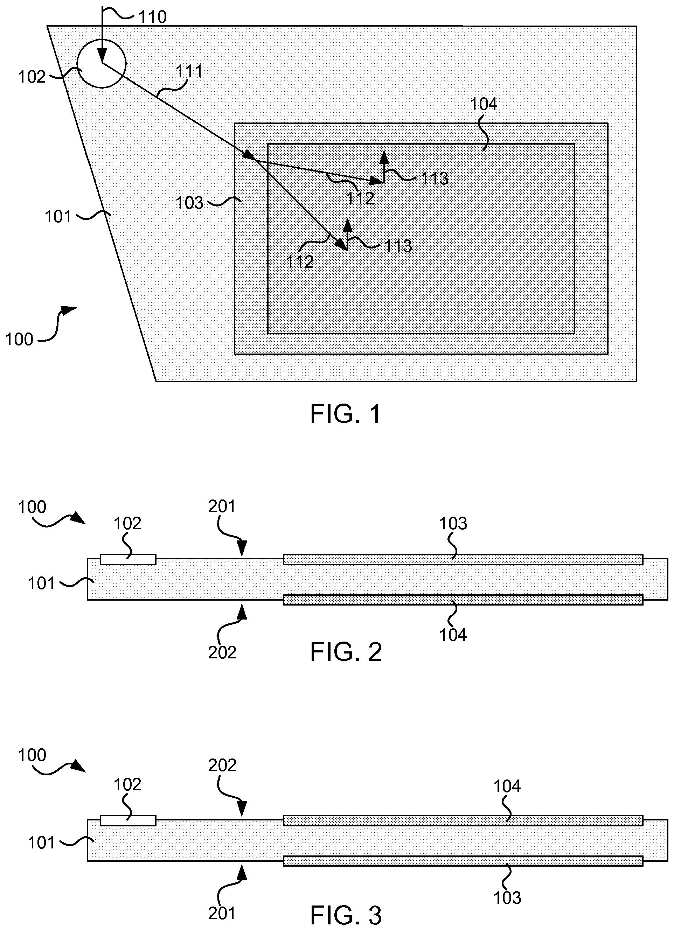

Fig. 1 illustrates a schematic representation of a display structure according to an embodiment.

According to an embodiment, a display structure 100 comprises a waveguide 101.

The waveguide 101 may comprise, for example, a substantially planar waveguide. Alternatively or additionally, the waveguide 101 may also comprise curved sections. For example, the waveguide 101 may correspond to a lens of augmented reality (AR) glasses.

The display structure 100 further comprises an in-coupling (IC) structure 102 configured to couple a set of input beams 110 into the waveguide 101 as a set of in-coupled beams 111.

The set of input beams 110 may be generated by, for example, a scanner-based optical engine. The set of input beams 110 may represent an image generated by, for example, such an optical engine. Thus, the set of input beams 110 may also be referred to as, for example, image-bearing light rays/beams, image-carrying light rays/beams, and/or similar.

The in-coupling structure 102 may comprise, for example, a diffractive grating on a surface of the waveguide 101. The in-coupling structure 102 couples the set of input beams 110 into the waveguide 101 via diffraction.

The display structure 100 further comprises an exit pupil expansion (EPE) structure 103 located on a first side of the waveguide 101 and configured to receive the set of in-coupled beams 111 and to diffract the set of in-coupled beams 111 in a plurality of directions, producing a diffracted set of beams 112.

It should be appreciated that the diffracted set of beams 112 illustrated in the embodiment of Fig. 1 are only illustrative. In practical embodiments, the EPE structure 103 can diffract the set of in-coupled beams 111 in a plurality of directions in a much more complex manner and the diffracted set of beams 112 can interact with the EPE structure 103 a plurality of times as is disclosed herein.

The display structure 100 further comprises an out-coupling (OC) structure 104 located on a second side of the waveguide 101 opposite to the first side and configured to receive, from the exit pupil expansion structure 103, at least the diffracted set of beams 112, to out-couple at least the diffracted set of beams 112 from the waveguide 101 as a set of output beams 113, and to not out-couple the set of in-coupled beams 111.

The out-coupling structure 104 may comprise, for example, a diffractive grating on a surface of the waveguide 101. The out-coupling structure 104 out-couples the diffracted set of beams 112 from the waveguide 101 via diffraction.

The OC structure 104 is configured to not out-couple the set of in-coupled beams 111, in particular, the OC structure 104 is configured to not out-couple the set of in-coupled beams 111 via zeroth order or first order diffractions.

The set of output beams 113 may represent, for example, an expanded version of the image formed by the set of input beams 110.

The set of in-coupled beams 111 and the diffracted set of beams 112 can be guided inside the waveguide via total internal reflection (TIR).

The diffracted set of beams 112 may interact with the EPE structure 103 and/or with the OC structure 104 a plurality of times before the diffracted set of beams 112 is out-coupled from the waveguide 101 as the set of output beams 113.

Herein, a beam may also be referred to as a ray, a light beam, a light ray, or similar.

Since the OC structure 104 does not out-couple the set of in-coupled beams 111, the EPE structure 103 and/or the OC structure 104 can be positioned in a flexible manner. For example, the set of in-coupled beams 111 from the IC structure 102 can be directed directly towards the OC structure 104 and/or the EPE structure 103 without reducing image uniformity in the out-coupled image due to set of in-coupled beams 111 being out-coupled by the OC structure 104.

The display structure 100 can allow additional control over diffraction efficiency and phase over the area of the OC structure 104 due to the overlaid EPE structure 103, which can help to improve the image uniformity over the eyebox. Moreover, possible interference effects can be reduced due to multiple paths that light can take within the waveguide 101 due to the interplay between the EPE structure 103 and the OC structure 104. The multiple paths that the light can take can cause averaging of any phase differences and, therefore, interference effects can be reduced.

According to the claimed invention, the in-coupling structure 102 comprises a one-dimensional in-coupling diffractive grating and the out-coupling structure 104 comprises a one-dimensional out-coupling diffractive grating.

According to an embodiment, the exit pupil expansion structure 103 comprises a two-dimensional diffractive grating.

According to an embodiment, the exit pupil expansion structure 103 comprises a two-dimensional hexagonal diffractive grating or two-dimensional a rectangular diffractive grating.

Herein, a diffractive grating may also be referred to as a surface-relief grating, a grating, a diffraction grating, or similar.

According to an embodiment, the exit pupil expansion structure 103 is configured to diffract the set of in-coupled beams via zeroth order and first order diffractions.

According to an embodiment, the IC structure 102 is configured to diffract the set of input beams 110 via zeroth order and first order diffractions.

According to an embodiment, the OC structure 104 is configured to diffract the diffracted set of beams 112 via zeroth order and first order diffractions.

It should be understood that the geometry of the display structure 100 illustrated in the embodiment of Fig. 1 is only exemplary and the display structure 100 may be implemented in various other ways.

According to an embodiment, a display device comprises the display structure 100.

The display device may comprise a scanner-based optical engine, e.g., a laser-scanning optical engine, for directing the set of input beams to the in-coupling structure 102. Other types of optical engines may also be used.

The display device may be implemented as, for example, a see-through display device.

The display device may be implemented as, for example, a head-mounted display device.

Fig. 2 illustrates a cross-sectional representation of a display structure according to an embodiment.

According to an embodiment, the exit pupil expansion structure 103 covers a first section of the waveguide 101, the out-coupling structure 104 covers a second section of the waveguide 101, and the first section and the second section at least partially overlap.

Herein, a section of the waveguide 101 may refer to any section, such as a subsection, of the waveguide 101 in the plane of the waveguide 101. Thus, a section may comprise both the first side 201 and the second side 202 of the waveguide 101.

Herein, an overlap may refer to overlap in dimensions along the plane of the waveguide 101.

For example, in the embodiment of Fig. 2, the first section and the second section are substantially equivalent. In other embodiments, the first section and the second section may overlap only partially. For example, the first section and/or the second section may be offset compared to the embodiment of Fig. 2 and/or the second section may be smaller than the first section.

Overlap of the EPE structure 103 and the OC structure 104 can allow additional control over the intensity and phase distribution of light reaching the OC structure 104 as at the EPE structure 103 (and OC structure 104) diffraction efficiency and phase can be modulated with respect to position. The diffraction efficiency and phase can be modulated with respect to position by, for example, adjusting local properties of the diffractive grating of the EPE structure 103 and/or of the diffractive grating of the OC structure 104.

In the embodiment of Fig. 2, the IC structure 102 is located on the first side 201 of the waveguide 101.

Fig. 3 illustrates a cross-sectional representation of a display structure according to an embodiment.

In the embodiment of Fig. 3, the IC structure 102 is located on the second side 202 of the waveguide 101.

In any embodiment disclosed herein, the OC structure 104 may be configured to out-couple the diffracted set of beams 112 from the waveguide 101 as the set of output beams 113 to the first side 201 or to the second side 202 of the waveguide 101. Thus, the side to which the OC structure 104 is configured to out-couple the diffracted set of beams 112 from the waveguide 101 does not depend on which side of the waveguide 101 the OC structure 104 is positioned.

In any embodiment disclosed herein, the IC structure 102 may be configured to in-couple the set of input beams 110 into the waveguide 101 as the set of in-coupled beams 111 from the first side 201 or from the second side 202 of the waveguide 101. Thus, the side from which the IC structure 102 is configured to in-couple the set of input beams 110 into the waveguide 101 does not depend on which side of the waveguide 101 the IC structure 102 is positioned.

In any embodiment disclosed herein, the IC structure 102 and/or the OC structure 104 may comprise reflective or transmissive diffractive gratings. The side to which the OC structure 104 is configured to out-couple the diffracted set of beams 112 from the waveguide 101 may be the same side or the opposite side from the side from which the IC structure 102 is configured to in-couple the set of input beams 110 into the waveguide 101. Thus, a projector generating an image corresponding to the set of input beams 110 may be on the same side or on the opposite side from an eye of a user viewing the image corresponding to the set of output beams 113.

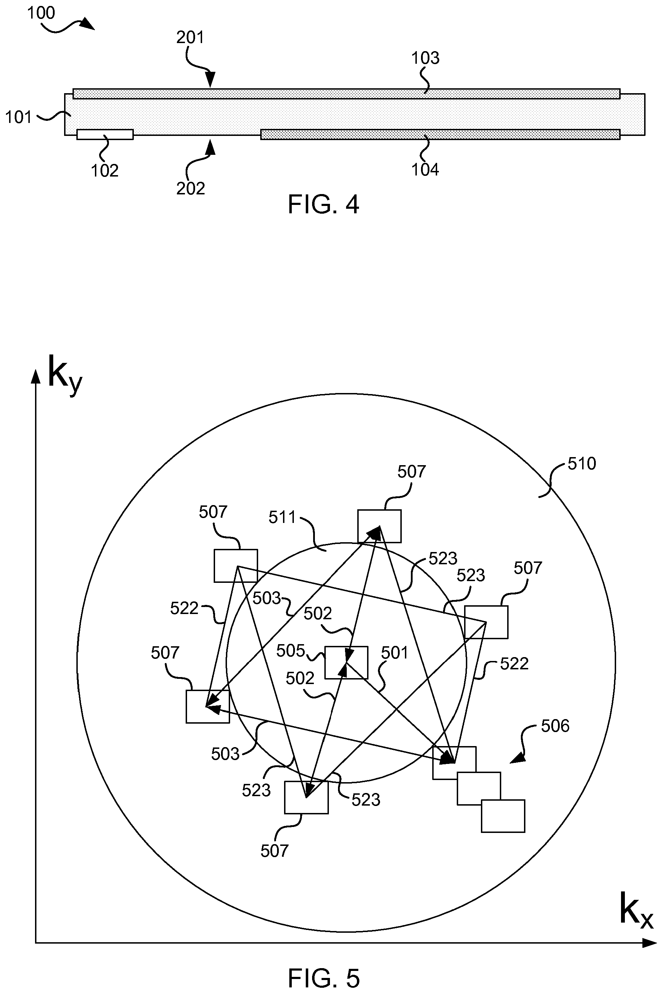

Fig. 4 illustrates a cross-sectional representation of a display structure according to an embodiment.

According to an embodiment, the first section encompasses the second section.

When the first section encompasses the second section, the EPE structure 103 may be configured to expand the image corresponding to the set of input beams 110 to the whole area of the OC structure 104.

When the first section does not encompass the second section, the EPE structure 103 may still expand the image corresponding to the set of input beams 110 to the whole area of the OC structure 104, since the EPE structure 103 may expand the image to at least some areas outside the first section, such as to areas close to the edges of the first section.

In some embodiments, the first section corresponds to the second section. Thus, the EPE structure 103 and the OC structure 104 can have the same shape and position.

According to an embodiment, the in-coupling structure 102 is located on the second side 202 of the waveguide 101 and covers a third section of the waveguide 101, and the first section further encompasses the third section.

For example, in the embodiment of Fig. 4, the first section encompasses the second section and third section.

In some embodiments, the first section can cover the whole waveguide 101. In some embodiments, the first section can cover a smaller area.

Fig. 5 illustrates a k-space representation of grating vectors and transitions in the waveguide according to an embodiment.

According to an embodiment, the in-coupling structure 102 comprises a first one-dimensional diffractive grating with a first grating vector 501, the out-coupling structure comprises a second one-dimensional diffractive grating with a second grating vector 502, the exit pupil expansion structure comprises a two-dimensional hexagonal diffractive grating with a third grating vector 503, an angle between the first grating vector 501 and the third grating vector 503 is substantially 30 degrees or substantially 90 degrees, and a length of the third grating vector 503 is substantially 1.7 times a length of the first grating vector 501.

For example, in the embodiment of Fig. 5, two grating vectors that may correspond to the third grating vector 503 are illustrated. An angle between these two vectors is substantially 60 degrees and their lengths are substantially equal. Thus, they form a hexagonal lattice.

Additionally or alternatively, the length of the third grating vector 503 may be substantially $\sqrt{3}$ times the length of the first grating vector 501 and/or within some tolerance from this. For example, the length of the third grating vector 503 may be substantially 1.5 - 1.9, 1.6 - 1.8, 1.65 - 1.75, or 1.675 - 1.725 times the length of the first grating vector 501.

The angle between the first grating vector 501 and the third grating vector 503 may be, for example, substantially 29.5 - 30.5 degrees or substantially 89.5 - 90.5 degrees.

According to an embodiment, an angle between the first grating 501 vector and the second grating vector 502 is substantially 60 degrees.

The angle between the first grating 501 vector and the second grating vector 502 may be, for example, substantially 59.5 - 60.5 degrees.

According to an embodiment, a length of the first grating vector 501 is substantially equal to a length of the second grating vector 502.

When the IC structure 102 comprises a one-dimensional diffractive grating, the OC structure 104 comprises one-dimensional diffractive grating, and the EPE structure 103 comprises a two-dimensional hexagonal diffractive grating, direct outcoupling between the IC structure 102 and the OC structure 104 can be blocked. This can allow a more flexible positioning of the IC structure 102 with respect to the OC structure 104. Thus, the set of in-coupled beams 111 from the IC structure 102 can be directed directly towards the OC structure 104. Further, the EPE structure 103 does not out-couple the diffracted set of beams 112. Therefore, for out-coupling, the set of in-coupled beams 111 need to interact with the EPE structure 103 at least once and then the resulting diffracted set of beams 112 need to interact with the OC structure 104.

The interplay between the hexagonal EPE structure 103 and the one-dimensional OC structure 104 can allow a greater number of paths that the diffracted set of beams 112 can take. As can be seen from, for example, the embodiment of Fig. 5, the diffracted set of beams 112 can interact with the EPE structure 103 and with the OC structure 104 in various ways before the diffracted set of beams 112 is out-coupled by the OC structure 104 as the set of output beams 113. This can reduce interference effects in the image formed by the set of output beams 113.

Herein, a hexagonal diffractive grating may refer to a diffractive grating that has a two-dimensional hexagonal lattice structure. A hexagonal lattice comprises a 60° angle between the grating vectors and the grating vectors are of the same length.

It should be understood that the manufacturing of a lattice structure may be limited by the manufacturing method used. Thus, any lattice that has the aforementioned features within the tolerances of the used manufacturing method may be considered a hexagonal lattice.

The grating vectors may represent the periodicity and orientation of the corresponding diffractive gratings. For example, a diffractive grating can comprise ridges/grooves and the grating vectors can correspond to the spatial periodicity and orientation of these ridges/grooves. The structure of these ridges/grooves define the diffraction caused by the diffractive grating. Length of a grating vector may be inversely proportional to the spatial period of the corresponding diffractive grating in the direction of the grating vector. Thus, the ridges/grooves of the diffractive grating may run along a direction perpendicular to the direction of the grating vector.

It should be appreciated that the grating vector for a specific diffractive grating can be chosen in various ways. For example, for a one-dimensional grating, there may be two possible grating vectors pointing in the opposite directions that describe the same one-dimensional grating. Thus, in some embodiments disclosed herein, the grating vectors may be illustrated as two-way arrows.

The two-dimensional hexagonal diffractive grating of the EPE structure 103 may comprise two grating vectors. One grating vector of the two grating vectors of the two-dimensional hexagonal diffractive grating may be at a 30 degree angle with respect to the first grating vector 501. The other grating vector of the two grating vectors of the two-dimensional hexagonal diffractive grating may be at a 90 degree angle with respect to the first grating vector 501. Thus, the angle between the two grating vectors of the two-dimensional hexagonal diffractive grating may be 60 degrees.

Herein, an annular guided propagation domain 510 may refer to a part of the k-space in which beams are guided inside the waveguide 101. An example of an annular guided propagation domain 510 is illustrated in the embodiment of Fig. 5.

Each k-vector in k-space can represent a propagation direction of a beam inside the waveguide 101. The magnitude of each k-vector corresponds to a wave-number *k.* A k-vector can be expressed as k = *nv̂*, where *n* is the refractive index of the medium of the waveguide 101 and *v̂* is a unit vector pointing towards the propagation direction of the k-vector. ***k*** may also be referred to as a normalized k-vector.

The waveguide 101 can guide beams having certain k-vectors via total internal reflection (TIR). A coupling domain 511 corresponds to k-vectors that do not have sufficient x and/or y components to be guided inside the waveguide 101 via TIR. Here, the x and y axes are in the plane of the waveguide 101 while the z axis is along a thickness direction of the waveguide 101. For such beams, the angle between the beam and the surface(s) of the waveguide 101 is not sufficient to cause TIR as governed by Snell's law. K-vectors inside the annular guided propagation domain 510 have sufficient x and/or y components to be guided inside the waveguide 101 via TIR. K-vectors at the outer circumference of the annular guided propagation domain 510 correspond to beams propagating along the plane of the waveguide 101, i.e. such beams do not have any z component. Radius of the coupling domain 511 may be 1 and radius of the annular guided propagation domain 510 may be n.

The set of input beams 110 can be associated with corresponding k-vectors 505. The in-coupling structure 102 can couple the set of input beams 110 into the waveguide 101 as the set of in-coupled beams 111. The set of in-coupled beams 111 can be associated with a set of in-coupled k-vectors 506.

For example, in the embodiment of Fig. 5, k-vectors 505 corresponding to the set of input beams 110 are located in the coupling domain 511 of the k-space. The in-coupling structure 102 can couple the set of input beams 110 into the waveguide 101 as the set of in-coupled beams 111 associated with a set of in-coupled k-vectors 506.

The in-coupling structure 101 may comprise, for example, a diffractive grating that can couple the set of input beams 110 into the waveguide 101. As can be seen in the embodiment of Fig. 5, since the set of in-coupled k-vectors 506 is inside the annular guided propagation domain 510, the corresponding set of in-coupled beams 111 are guided inside the waveguide 101 via TIR.

The different k-vectors in the set of in-coupled k-vectors 506 may correspond to, for example, different colours and/or different parts of an image represented by the set of input beams 110. For example, the set of input beams 110 may comprise green, blue, and red channels. Due to the different wavelength of each such colour channel, each colour may occupy a different part of the k-space. For example, in the embodiment of Fig. 5, each of the three rectangles in the set of in-coupled k-vectors 506 may correspond to a colour channel of the image represented by the set of input beams 110. The possible transitions are only illustrated for one of these rectangles in the embodiment of Fig. 5 for clarity.

Herein, a transition in k-space may correspond to an interaction of a set of beams with a diffractive grating. Such an interaction can cause the set of beams to propagate into a different direction or directions than before the interaction. The change in propagation direction can be observed as a translation in k-space along a transition.

In the embodiments disclosed herein, some transitions correspond to grating vectors and are therefore illustrated using the grating vectors in k-space. For example, in the embodiment of Fig. 5, the grating vectors 501, 502, 503 also correspond to possible transitions in k-space.

The EPE structure 103 can receive the set of in-coupled beams 111 and diffract the set of in-coupled beams 111 in a plurality of directions producing the diffracted set of beams 112. In terms of k-space representation, this can be illustrated as the in-coupled k-vectors 506 being translated in k-space along a transition 503, 523 corresponding to diffractions caused by the EPE structure 103, resulting in diffracted k-vectors 507.

The out-coupling structure 104 can receive, from the EPE structure 103, the diffracted set of beams 112 and to out-couple the diffracted set of beams 112 from the waveguide 101 as a set of output beams 113. In terms of k-space representation, this can be illustrated as a transition from propagation domain 510 into the coupling domain 511 along the second grating vector 502. For example, in the embodiment of Fig. 5, two possible diffracted k-vectors 507 in the propagation domain 510 from which the OC structure 104 can out-couple the diffracted set of beams 112 are illustrated.

The diffracted set of beams 112 do not always out-couple when interacting with the OC structure 104. For example, in the embodiment of Fig. 5, transitions 522 correspond to diffractions caused by the OC structure 104 that do not out-couple the diffracted set of beams 112.

According to an embodiment, the guided propagation domain 510 surrounds a coupling domain 511.

Although in some embodiments disclosed herein the k-vectors 505 corresponding to the set of input beams 110 are located at the k-space origin, this may not be the case for all embodiments. For example, if the set of input beams 110 is not perpendicular to the waveguide 101, the k-vectors 505 corresponding to the set of input beams 110 may be located in some other part of the coupling domain 511.

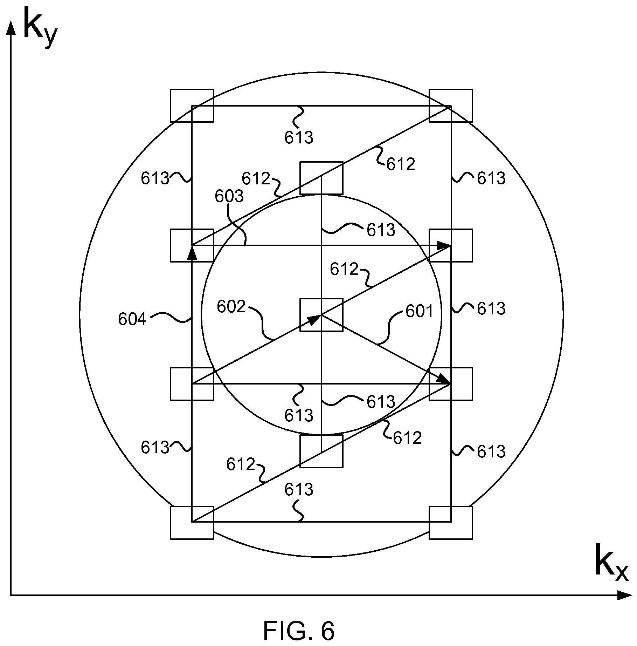

Fig. 6 illustrates a k-space representation of grating vectors and transitions in the waveguide according to an embodiment.

In the embodiment of Fig. 6, the IC structure 102 comprises a one-dimensional diffractive grating, the OC structure 104 comprise a one-dimensional diffractive grating, and the EPE structure 103 comprises a two-dimensional rectangular diffractive grating.

According to an embodiment, the in-coupling structure comprises a first one-dimensional diffractive grating with a first grating vector 601, the out-coupling structure comprises a second one-dimensional diffractive grating with a second grating vector 602, the exit pupil expansion structure comprises a two-dimensional rectangular diffractive grating with a third grating vector 603 and a fourth grating vector 604, and the first grating vector and the second grating vector correspond to half-diagonals of a rectangle defined by the third grating vector 603 and the fourth grating vector 604.

Herein, a half-diagonal may refer to one half of a diagonal of a rectangle. An example of a half-diagonal is illustrated in the embodiment of Fig. 6, where the second grating vector 602 correspond to a half-diagonal of a rectangle formed by the third grating vector 603 and the fourth grating vector 604.

According to an embodiment, a length of the first grating vector 601 is substantially equal to a length of the second grating vector 602.

When the IC structure 102 comprises a first one-dimensional diffractive grating, the OC structure 104 comprises a second one-dimensional diffractive grating, and the EPE structure 103 comprises a two-dimensional rectangular diffractive grating, the light needs to interact with all three gratings before the light can be out-coupled from the waveguide 101. Thus, the OC structure 104 does not out-couple the set of in-coupled beams 111. This can allow flexible positioning of IC structure 102 with respect to OC structure 104 since the set of in-coupled beams 111 can be directed directly towards OC structure 104 without the OC structure 104 out-coupling the set of in-coupled beams 111.

When the EPE structure 103 comprises a two-dimensional rectangular diffractive grating, also the EPE structure 103 may outcouple light from the waveguide 101. For example, the set of in-coupled beams 111 may first interact with the OC structure 104 and then with the EPE structure 103. As can be seen from Fig. 6, this can lead to out-coupling of the diffracted set of beams 112.

Herein, a rectangular diffractive grating may refer to a diffractive grating that has a two-dimensional rectangular lattice structure. A rectangular lattice comprises a substantially 90° angle between the grating vectors and the grating vectors can be of different or of the same length.

It should be understood that the manufacturing of a lattice structure may be limited by the manufacturing method used. Thus, any lattice that has the aforementioned features within the tolerances of the used manufacturing method may be considered a rectangular lattice.

The embodiment of Fig. 6 illustrates at least some of the possible transitions in k-space for a display structure comprising an IC structure 102 comprising a first one-dimensional diffractive grating with a first grating vector 601, an OC structure 104 comprising a second one-dimensional diffractive grating with a second grating vector 602, and an EPE structure 103 comprising a two-dimensional rectangular diffractive grating with a third grating vector 603 and a fourth grating vector 604.

Transitions 612 indicated in the embodiment of Fig. 6 can occur due to diffraction caused by the OC structure 104. Transitions 613 indicated in the embodiment of Fig. 6 can occur due to diffraction caused by the EPE structure 103. The grating vectors 601 - 604 also corresponds to transitions that can occur due to diffraction caused by the corresponding diffractive grating.

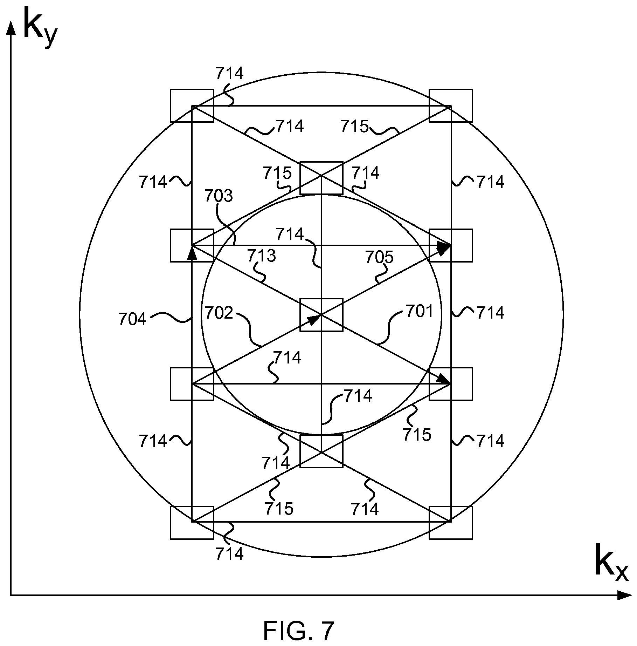

Fig. 7 illustrates a k-space representation of grating vectors and transitions in the waveguide according to a comparative example, which does not fall under the scope of the claims.

In the comparative example of Fig. 7, the IC structure 102 comprises a two-dimensional diffractive grating with two grating vectors 701, 705, the OC structure 104 comprise a one-dimensional diffractive grating with grating vector 702, and the EPE structure 103 comprises a two-dimensional rectangular diffractive grating with two grating vectors 703, 704.

Transitions 714 indicated in the comparative example of Fig. 7 can occur due to diffraction caused by the IC structure 102 or by at the EPE structure 103. Transitions 715 indicated in the comparative example of Fig. 7 can occur due to diffraction caused by the OC structure 104, by the IC structure 102, or by the EPE structure 103. Transition 713 indicated in the comparative example of Fig. 7 can occur due to diffraction cause by the IC structure 102.

In the case of diagonal transitions in the transitions 714, 715, the EPE structure 103 can only cause transitions that correspond to whole diagonals while the IC structure 102 and the OC structure 104 can cause transitions that correspond to half diagonals.

The grating vectors 701 - 705 also corresponds to transitions that can occur due to diffraction caused by the corresponding diffractive grating. The transition corresponding to grating vector 702 can also occur due to diffraction caused by the IC structure 102. The transition corresponding to grating vector 705 can also occur due to diffraction caused by the OC structure 104. The transitions corresponding to grating vectors 703 and 704 can also occur due to diffraction caused by the IC structure 102. Diffraction caused by the EPE structure 103 can also cause a transition corresponding to the sum of grating vectors 702 and 705 and a transition corresponding to the sum of transition 713 and grating vector 701.

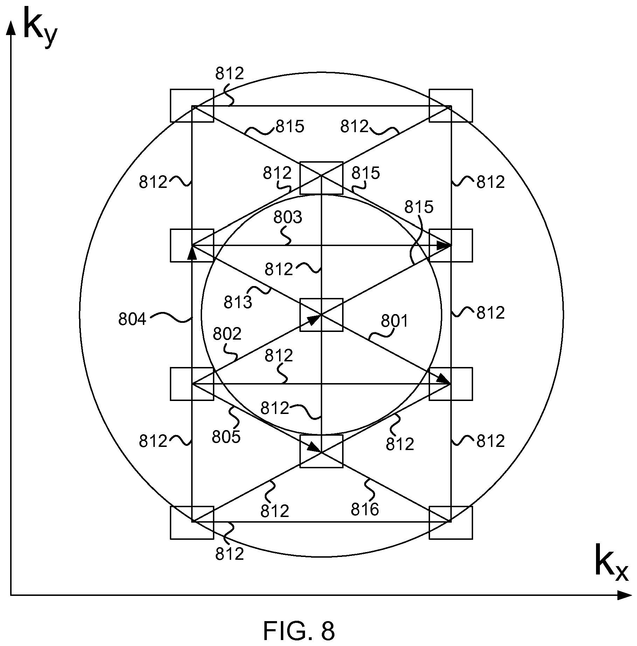

Fig. 8 illustrates a k-space representation of grating vectors and transitions in the waveguide according to a comparative example, which does not fall under the scope of the claims.

In the comparative example of Fig. 8, the IC structure 102 comprises a one-dimensional diffractive grating with grating vector 801, the OC structure 104 comprise a two-dimensional diffractive grating with two grating vectors 802, 805, and the EPE structure 103 comprises a two-dimensional rectangular diffractive grating with grating vectors 803, 804.

Transitions 812 indicated in the comparative example of Fig. 8 can occur due to diffraction caused by the OC structure 104 or by the EPE structure 103. Transitions 815 indicated in the comparative example of Fig. 8 can occur due to diffraction caused by the OC structure 104, by the IC structure 102, or by the EPE structure 103. Transitions 813, 816 indicated in the comparative example of Fig. 8 can occur due to diffraction caused by the IC structure 102 or by the OC structure 104.

In the case of diagonal transitions in the transitions 815, 812, the EPE structure 103 can only cause transitions that correspond to whole diagonals while the IC structure 102 and the OC structure 104 can cause transitions that correspond to half diagonals.

The grating vectors 801 - 805 also corresponds to transitions that can occur due to diffraction caused by the corresponding diffractive grating. The transition corresponding to grating vector 801 can also occur due to diffraction caused by the OC structure 104. The transition corresponding to grating vector 805 can also occur due to diffraction caused by the IC structure 102.The EPE structure 103 can also cause a transition corresponding to the sum of transition 813 and grating vector 801, a transition corresponding to the sum of grating vector 805 and transition 816, and a transition corresponding to the sum of grating vectors 802 and 815.

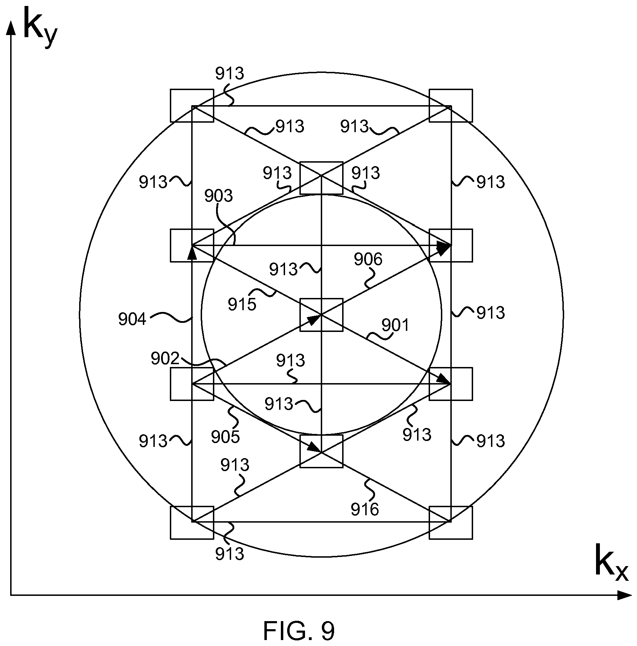

Fig. 9 illustrates a k-space representation of grating vectors and transitions in the waveguide according to a comparative example, which does not fall under the scope of the claims.

In the comparative example of Fig. 9, the IC structure 102 comprises a two-dimensional diffractive grating with two grating vectors 901, 906, the OC structure 104 comprise a two-dimensional diffractive grating with two grating vectors 902, 905, and the EPE structure 103 comprises a two-dimensional rectangular diffractive grating with two grating vectors 903, 904.

Transitions 913 indicated in the comparative example of Fig. 9 can occur due to diffraction caused by the EPE structure 103, the OC structure 104, or the IC structure 102. Transitions 915, 916 can occur due to diffraction caused by the IC structure 102 or by the OC structure 104.

In the case of diagonal transitions in the transitions 913, the EPE structure 103 can only cause transitions that correspond to whole diagonals while the IC structure 102 and the OC structure 104 can cause transitions that correspond to half diagonals.

The grating vectors 901 - 906 also corresponds to transitions that can occur due to diffraction caused by the corresponding diffractive grating. The transition corresponding to grating vectors 902, 905 can also occur due to diffraction caused by the IC structure 102.The transition corresponding to grating vectors 901, 906 can also occur due to diffraction caused by the OC structure 104. The transitions corresponding to grating vectors 903, 904 can also occur due to diffraction caused by the IC structure 102 or by the OC structure 104. The EPE structure 103 can also cause a transition corresponding to the sum of transition 915 and grating vector 901 and a transition corresponding to the sum of grating vector 905 and transition 916.

When the IC structure 102 and/or the OC structure 104 comprises a two-dimensional diffractive grating, outcoupling of the set of in-coupled beams 111 without the set of in-coupled beams 111 interacting with the EPE structure 103 is also possible.

In the comparative examples of Figs. 7 - 9, only transitions caused by first order diffractions are illustrated. Higher order diffractions can also cause transitions not illustrated in the comparative examples.

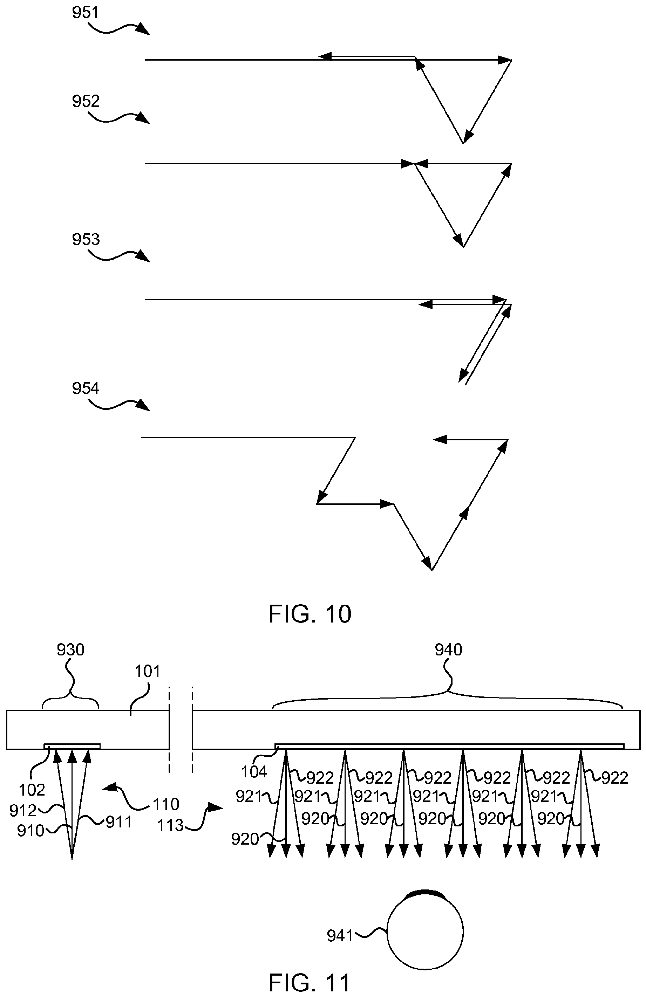

Fig. 10 illustrates a schematic representation of beam paths according to examples.

The examples of Fig. 10 illustrates various paths that the set of in-coupled beams 111 and the diffracted set of beams 112 can take that result in the beams returning to the IC structure 102. This can reduce the optical efficiency of the display structure 100. In the embodiment of Fig. 10, the EPE structure 103 comprises a two-dimensional hexagonal diffractive grating.

The first path 951 corresponds to the set of beams first interacting with the IC structure 102, then with the EPE structure 103, then again with the EPE structure 103, and then with the OC structure 104.

The second path 952 corresponds to the set of beams first interacting with the IC structure 102, then with the OC structure 104, then with the EPE structure 103, and then again with the EPE structure 103.

The first path 951 and the second path 952 can be blocked if the OC structure 104 is not along an initial path of the set of in-coupled beams 111. However, such a solution limits the available design options for the display structure 100.

The third path 953 corresponds to the set of beams first interacting with the IC structure 102, then with the EPE structure 103, then with the OC structure 104 via second order diffraction, and then with the EPE structure 103.

The third path 953 cannot be blocked but it should be weak due to the second order diffraction.

The fourth path 954 corresponds to the set of beams first interacting with the IC structure 102, then with the EPE structure 103, then again with the EPE structure 103, then with the OC structure 104, then with the EPE structure 103, and then again with the EPE structure 103.

It may not be possible to block the fourth path 954.

There can also be various other paths, such as longer paths, that can also result in the set of beams returning to the IC structure 102. For example, the diffracted set of beams 112 may interact with the EPE structure 103 and/or with the OC structure 104 any number of times and then return to the IC structure 102.

Some of the beam paths 951 - 954 can be blocked by designing the geometry of the display structure 100 appropriately. For example, the first path 951 and the second path 952 can be blocked if the OC structure 104 is not along an initial path of the set of in-coupled beams 111. However, the EPE structure 103 should be along such a path so that the EPE structure 103 can receive the set of in-coupled beams 111. Further, it may be desirable to have the EPE structure 103 and the OC structure 104 at least partially overlapping.

At least some embodiments disclosed herein can block the beam paths 951 - 954 even when the OC structure 104 is along an initial path of the set of in-coupled beams 111. Moreover, in embodiments falling under the scope of the claims, direct out-coupling between IC structure 102 and the OC structure 104 is blocked, which allows flexible positioning of IC structure 102 with respect to the OC structure 104 since light from IC structure 102 can be directed directly towards OC structure 104.

Fig. 11 illustrates a schematic representation of correspondence between the set of input beams and the set of output beams.

In examples not necessarily falling under the scope of the claims, out-coupling structure 104 can out-couple the light from the waveguide 101 each time the light interacts with the out-coupling structure 104. Thus, the image can be both expanded and out-coupled by the out-coupling structure 104.

A beam 910 in the set of input beams 110 corresponding to a middle section of an image can be converted into corresponding output beams 920 in the set of output beams 113 that are aligned with an optical axis that may be perpendicular to the exit pupil region/area 940 of the waveguide 101.

A beam 911 in the set of input beams 110 corresponding to the right side of the image can be converted into corresponding output beams 921 in the set output beams 113 that exit the waveguide 101 at such an angle that they appear to have originated from a location in the right portion of the field of view of the user 941. Similarly, a beam 912 in the set of input beams 110 corresponding to the left side of the image can be converted into corresponding output beams 922 in the set of output beams 113 that exit the waveguide 101 at such an angle that they appear to have originated from a location in the left portion of the field of view of the user 941.

Although the beams 920, 921, 922 corresponding to the different parts of the image in set of output beams 113 are illustrated to be output from singular points from the waveguide 101, this is only for illustrative purposes. In practice, each beam 920, 921, 922 may be output from a different part of the waveguide 101.

Output beams in the set of output beams 113 corresponding to a specific point of the image may comprise beams that propagate along parallel paths, as shown in the embodiment of Fig. 11, or diverging paths. The former case results in the image being projected so as to appear to have originated from optical infinity, while in the latter case the image is projected so as to appear to have originated from some finite distance.

Thus, the display structure 100 can in-couple the set of input beams 110 and guide them to form an exit pupil region/area 940, which is larger than the entrance pupil region/area 930. The display structure 100 can convert a given input beam at a specific angle in the set of input beams 110 into many corresponding beams which are output across the exit pupil region/area 940 in the set of output beams 113 at an angle that is correlated with that the specific input beam.

Both the EPE structure 103 and the out-coupling structure 104 can be configured to expand the image. For example, the EPE structure 103 may expand the image in one direction and the out-coupling structure 104 can expand the image in a perpendicular direction. Alternatively, the EPE structure 103 may be configured to expand the image in two perpendicular directions and the out-coupling structure 104 may be configured to out-couple the light from the waveguide 101.

Any range or device value given herein may be extended or altered without losing the effect sought. Also any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

Aspects of any of the embodiments described above may be combined with aspects of any of the other embodiments described to form further embodiments without losing the effect sought.

The term 'comprising' is used herein to mean including the method, blocks or elements identified, but that such blocks or elements do not comprise an exclusive list and a method or apparatus may contain additional blocks or elements.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments within the scope of the claims.

## Claims

1. A display structure (100), comprising:
- a waveguide (101);
- an in-coupling structure (102) configured to couple a set of input beams into the waveguide as a set of in-coupled beams;
- an exit pupil expansion structure (103) located on a first side (201) of the waveguide (101) and configured to receive the set of in-coupled beams and to diffract the set of in-coupled beams in a plurality of directions, producing a diffracted set of beams; and
- an out-coupling structure (104) located on a second side (202) of the waveguide (101) opposite to the first side (201) and configured to receive, from the exit pupil expansion structure (103), at least the diffracted set of beams, to out-couple at least the diffracted set of beams from the waveguide (101) as a set of output beams, and to not out-couple the set of in-coupled beams;
wherein the in-coupling structure (102) comprises a one-dimensional in-coupling diffractive grating and the out-coupling structure (104) comprises a one-dimensional out-coupling diffractive grating; and
wherein light in the set of input beams needs to interact with the in-coupling structure (102), the exit pupil expansion structure (103), and the out-coupling structure (104) before the light can be out-coupled from the waveguide (101),
**characterised in that**:
the out-coupling structure (104) is further configured to diffract the set of in-coupled beams.

2. The display structure (100) according to claim 1, wherein the exit pupil expansion structure (103) comprises a two-dimensional hexagonal diffractive grating or a two-dimensional rectangular diffractive grating.

3. The display structure (100) according to any preceding claim, wherein the exit pupil expansion structure (103) covers a first section of the waveguide (101), the out-coupling structure (104) covers a second section of the waveguide (101), and the first section and the second section at least partially overlap.

4. The display structure (100) according to claim 3, wherein the first section encompasses the second section.

5. The display structure (100) according to claim 4, wherein the in-coupling structure (102) is located on the second side (202) of the waveguide (101) and covers a third section of the waveguide, and wherein the first section further encompasses the third section.

6. The display structure (100) according to any preceding claim, wherein the in-coupling structure (102) comprises a first one-dimensional diffractive grating with a first grating vector (501), the out-coupling structure (104) comprises a second one-dimensional diffractive grating with a second grating vector (502), the exit pupil expansion structure (103) comprises a two-dimensional hexagonal diffractive grating with a third grating vector (503), an angle between the first grating vector (501) and the third grating vector (503) is substantially 30 degrees or substantially 90 degrees, and a length of the third grating (503) vector is substantially 1.7 times a length of the first grating vector (501).

7. The display structure (100) according to claim 6, wherein an angle between the first grating vector (501) and the second grating vector (502) is substantially 60 degrees.

8. The display structure (100) according to of claims 1 - 5, wherein the in-coupling structure (102) comprises a first one-dimensional diffractive grating with a first grating vector (601), the out-coupling structure (104) comprises a second one-dimensional diffractive grating with a second grating vector (602), the exit pupil expansion structure (103) comprises a two-dimensional rectangular diffractive grating with a third grating vector (603) and a fourth grating vector (604), and the first grating vector (601) and the second grating vector (602) correspond to half-diagonals of a rectangle defined by the third grating vector (603) and the fourth grating vector (604).

9. The display structure (100) according to any of claims 6 - 8, wherein a length of the first grating vector (501, 601) is substantially equal to a length of the second grating vector (502, 602).

10. A display structure (100) according to any of the preceding claims, wherein the exit pupil expansion structure (103) is configured to diffract the set of in-coupled beams (111) via zeroth order and first order diffractions.

11. A display device comprising a display structure (100) according to any preceding claim.

12. A display device according to claim 11, comprising a scanner-based optical engine, e.g., a laser-scanning optical engine, for directing the set of input beams to the in-coupling structure.

13. A display device according to claim 11 or 12 implemented as a see-through display device.

14. A display device according to any of claims 11 - 13 implemented as a head-mounted display device.

## Patentansprüche

1. Anzeigestruktur (100), umfassend:
- einen Wellenleiter (101);
- eine Einkopplungsstruktur (102), die dazu konfiguriert ist, einen Satz von Eingangsstrahlen als einen Satz von eingekoppelten Strahlen in den Wellenleiter einzukoppeln;
- eine Austrittspupillenerweiterungsstruktur (103), die auf einer ersten Seite (201) des Wellenleiters (101) lokalisiert ist und dazu konfiguriert ist, den Satz von eingekoppelten Strahlen zu empfangen und den Satz von eingekoppelten Strahlen in eine Mehrzahl von Richtungen zu beugen, wodurch ein gebeugter Satz von Strahlen erzeugt wird; und
- eine Auskopplungsstruktur (104), die auf einer zweiten Seite (202) des Wellenleiters (101) gegenüber der ersten Seite (201) lokalisiert ist und dazu konfiguriert ist, von der Austrittspupillenerweiterungsstruktur (103) mindestens den gebeugten Satz von Strahlen zu empfangen, mindestens den gebeugten Satz von Strahlen aus dem Wellenleiter (101) als einen Satz von Ausgangsstrahlen auszukoppeln, und den Satz von eingekoppelten Strahlen nicht auszukoppeln;
wobei die Einkopplungsstruktur (102) ein eindimensionales einkoppelndes Beugungsgitter umfasst, und die Auskopplungsstruktur (104) ein eindimensionales auskoppelndes Beugungsgitter umfasst; und
wobei Licht in dem Satz von Eingangsstrahlen mit der Einkopplungsstruktur (102), der Austrittspupillenerweiterungsstruktur (103), und der Auskopplungsstruktur (104) wechselwirken muss, bevor das Licht aus dem Wellenleiter (101) ausgekoppelt werden kann,
**dadurch gekennzeichnet, dass**:
die Auskopplungsstruktur (104) ferner dazu konfiguriert ist, den Satz von eingekoppelten Strahlen zu beugen.

2. Anzeigestruktur (100) nach Anspruch 1, wobei die Austrittspupillenerweiterungsstruktur (103) ein zweidimensionales hexagonales Beugungsgitter oder ein zweidimensionales rechteckiges Beugungsgitter umfasst.

3. Anzeigestruktur (100) nach einem der vorhergehenden Ansprüche, wobei die Austrittspupillenerweiterungsstruktur (103) einen ersten Abschnitt des Wellenleiters (101) abdeckt, die Auskopplungsstruktur (104) einen zweiten Abschnitt des Wellenleiters (101) abdeckt, und der erste Abschnitt und der zweite Abschnitt sich zumindest teilweise überlappen.

4. Anzeigestruktur (100) nach Anspruch 3, wobei der erste Abschnitt den zweiten Abschnitt einschließt.

5. Anzeigestruktur (100) nach Anspruch 4, wobei die Einkopplungsstruktur (102) auf der zweiten Seite (202) des Wellenleiters (101) lokalisiert ist und einen dritten Abschnitt des Wellenleiters abdeckt, und wobei der erste Abschnitt ferner den dritten Abschnitt einschließt.

6. Anzeigestruktur (100) nach einem der vorhergehenden Ansprüche, wobei die Einkopplungsstruktur (102) ein erstes eindimensionales Beugungsgitter mit einem ersten Gittervektor (501) umfasst, die Auskopplungsstruktur (104) ein zweites eindimensionales Beugungsgitter mit einem zweiten Gittervektor (502) umfasst, die Austrittspupillenerweiterungsstruktur (103) ein zweidimensionales hexagonales Beugungsgitter mit einem dritten Gittervektor (503) umfasst, ein Winkel zwischen dem ersten Gittervektor (501) und dem dritten Gittervektor (503) im Wesentlichen 30 Grad oder im Wesentlichen 90 Grad beträgt, und eine Länge des dritten Gittervektors (503) im Wesentlichen das 1,7-Fache einer Länge des ersten Gittervektors (501) beträgt.

7. Anzeigestruktur (100) nach Anspruch 6, wobei ein Winkel zwischen dem ersten Gittervektor (501) und dem zweiten Gittervektor (502) im Wesentlichen 60 Grad beträgt.

8. Anzeigestruktur (100) nach einem der Ansprüche 1-5, wobei die Einkopplungsstruktur (102) ein erstes eindimensionales Beugungsgitter mit einem ersten Gittervektor (601) umfasst, die Auskopplungsstruktur (104) ein zweites eindimensionales Beugungsgitter mit einem zweiten Gittervektor (602) umfasst, die Austrittspupillenerweiterungsstruktur (103) ein zweidimensionales rechteckiges Beugungsgitter mit einem dritten Gittervektor (603) und einem vierten Gittervektor (604) umfasst, und der erste Gittervektor (601) und der zweite Gittervektor (602) Halbdiagonalen eines Rechtecks entsprechen, das durch den dritten Gittervektor (603) und den vierten Gittervektor (604) definiert ist.

9. Anzeigestruktur (100) nach einem der Ansprüche 6 - 8, wobei eine Länge des ersten Gittervektors (501, 601) im Wesentlichen gleich einer Länge des zweiten Gittervektors (502, 602) ist.

10. Anzeigestruktur (100) nach einem der vorhergehenden Ansprüche, wobei die Austrittspupillenerweiterungsstruktur (103) dazu konfiguriert ist, den Satz von eingekoppelten Strahlen (111) über Beugungen nullter Ordnung und erster Ordnung zu beugen.

11. Anzeigevorrichtung, umfassend eine Anzeigestruktur (100) nach einem der vorhergehenden Ansprüche.

12. Anzeigevorrichtung nach Anspruch 11, umfassend eine scannerbasierte optische Engine, z. B., eine Laserscanning-optische Engine, zum Ausrichten des Satzes von Eingangsstrahlen auf die Einkopplungsstruktur.

13. Anzeigevorrichtung nach Anspruch 11 oder 12, die als Durchsichtanzeigevorrichtung implementiert ist.

14. Anzeigevorrichtung nach einem der Ansprüche 11 bis 13, die als am Kopf befestigtes Display implementiert ist.

## Revendications

1. Structure d'affichage (100), comprenant :
- un guide d'ondes (101) ;
- une structure de couplage d'entrée (102) configurée pour coupler un ensemble de faisceaux d'entrée dans le guide d'ondes en tant qu'ensemble de faisceaux couplés d'entrée ;
- une structure d'agrandissement de pupille de sortie (103) située sur un premier côté (201) du guide d'ondes (101) et configurée pour recevoir l'ensemble de faisceaux couplés en entrée et pour diffracter l'ensemble de faisceaux couplés en entrée dans une pluralité de directions, produisant un ensemble diffracté de faisceaux ; et
- une structure de couplage de sortie (104) située sur un deuxième côté (202) du guide d'ondes (101) opposé au premier côté (201) et configurée pour recevoir, à partir de la structure d'agrandissement de pupille de sortie (103), au moins l'ensemble diffracté de faisceaux, pour coupler en sortie au moins l'ensemble diffracté de faisceaux du guide d'ondes (101) en tant qu'ensemble de faisceaux de sortie, et pour ne pas coupler en sortie l'ensemble de faisceaux couplés en entrée ;
dans laquelle la structure de couplage d'entrée (102) comprend un réseau de diffraction de couplage d'entrée unidimensionnel et
la structure de couplage de sortie (104) comprend un réseau de diffraction de couplage de sortie unidimensionnel ; et
dans laquelle la lumière dans l'ensemble de faisceaux d'entrée doit interagir avec la structure de couplage d'entrée (102), la structure d'agrandissement de pupille de sortie (103) et la structure de couplage de sortie (104) avant que la lumière ne puisse être couplée en sortie du guide d'ondes (101),
**caractérisée en ce que** :
la structure de couplage de sortie (104) est en outre configurée pour diffracter l'ensemble de faisceaux couplés en entrée.

2. Structure d'affichage (100) selon la revendication 1, dans laquelle la structure d'agrandissement de pupille de sortie (103) comprend une réseau de diffraction hexagonal bidimensionnel ou un réseau de diffraction rectangulaire bidimensionnel.

3. Structure d'affichage (100) selon l'une quelconque des revendications précédentes, dans laquelle la structure d'agrandissement de pupille de sortie (103) recouvre une première section du guide d'onde (101), la structure de couplage de sortie (104) recouvre une deuxième section du guide d'onde (101), et la première section et la deuxième section se chevauchent au moins partiellement.

4. Structure d'affichage (100) selon la revendication 3, dans laquelle la première section englobe la deuxième section.

5. Structure d'affichage (100) selon la revendication 4, dans laquelle la structure de couplage d'entrée (102) est située sur le deuxième côté (202) du guide d'onde (101) et recouvre une troisième section du guide d'onde, et dans laquelle la première section englobe en outre la troisième section.

6. Structure d'affichage (100) selon l'une quelconque des revendications précédentes, dans laquelle la structure de couplage d'entrée (102) comprend un premier réseau de diffraction unidimensionnel avec un premier vecteur de réseau (501), la structure de couplage de sortie (104) comprend un deuxième réseau de diffraction unidimensionnel avec un deuxième vecteur de réseau (502), la structure d'agrandissement de pupille de sortie (103) comprend une réseau de diffraction hexagonal bidimensionnel avec un troisième vecteur de réseau (503), un angle entre le premier vecteur de réseau (501) et le troisième vecteur de réseau (503) est sensiblement 30 degrés ou sensiblement 90 degrés, et une longueur du troisième vecteur de réseau (503) est sensiblement 1,7 fois une longueur du premier vecteur de réseau (501).

7. Structure d'affichage (100) selon la revendication 6, dans laquelle un angle entre le premier vecteur de réseau (501) et le deuxième vecteur de réseau (502) est sensiblement de 60 degrés.

8. Structure d'affichage (100) selon les revendications 1 à 5, dans laquelle la structure de couplage d'entrée (102) comprend un premier réseau de diffraction unidimensionnel avec un premier vecteur de réseau (601), la structure de couplage de sortie (104) comprend un deuxième réseau de diffraction unidimensionnel avec un deuxième vecteur de réseau (602), la structure d'agrandissement de pupille de sortie (103) comprend une réseau de diffraction rectangulaire bidimensionnel avec un troisième vecteur de réseau (603) et un quatrième vecteur de réseau (604), et le premier vecteur de réseau (601) et le deuxième vecteur de réseau (602) correspondent à des demi-diagonales d'un rectangle défini par le troisième vecteur de réseau (603) et le quatrième vecteur de réseau (604).

9. Structure d'affichage (100) selon l'une quelconque des revendications 6 à 8, dans laquelle une longueur du premier vecteur de réseau (501, 601) est sensiblement égale à une longueur du deuxième vecteur de réseau (502, 602).

10. Structure d'affichage (100) selon l'une quelconque des revendications précédentes, dans laquelle la structure d'agrandissement de pupille de sortie (103) est configurée pour diffracter l'ensemble de faisceaux couplés en entrée (111) via des diffractions de zéro-ème ordre et de premier ordre.

11. Dispositif d'affichage comprenant une structure d'affichage (100) selon l'une quelconque des revendications précédentes.

12. Dispositif d'affichage selon la revendication 11, comprenant un moteur optique à base de scanner, par exemple un moteur optique à balayage laser, pour diriger l'ensemble de faisceaux d'entrée vers la structure de couplage d'entrée.

13. Dispositif d'affichage selon la revendication 11 ou 12 mis en œuvre en tant que dispositif d'affichage transparent.

14. Dispositif d'affichage selon l'une quelconque des revendications 11 à 13 mis en œuvre en tant que dispositif d'affichage monté sur tête.
